(19) Europäisches Patentamt / European Patent Office / Office européen des brevets

(11) **EP 3 918 728 B1**

(12) **FASCICULE DE BREVET EUROPEEN**

(45) Date de publication et mention de la délivrance du brevet:
**24.05.2023 Bulletin 2023/21**

(21) Numéro de dépôt: **20701480.4**

(22) Date de dépôt: **28.01.2020**

(51) Classification Internationale des Brevets (IPC):
***H04B 7/155*** *(2006.01)*

(52) Classification Coopérative des Brevets (CPC):
**H04B 7/15542**

(86) Numéro de dépôt international:
**PCT/EP2020/052060**

(87) Numéro de publication internationale:
**WO 2020/157075 (06.08.2020 Gazette 2020/32)**

(54) **PROCÉDÉ ET SYSTÈME DE COMMUNICATION SANS FIL ENTRE DES DISPOSITIFS ÉMETTEURS ET UN DISPOSITIF RÉCEPTEUR AU MOYEN D'UN DISPOSITIF RÉPÉTEUR À RÉPÉTITION SIMULTANÉE**

DRAHTLOSES KOMMUNIKATIONS-VERFAHREN UND SYSTEM ZWISCHEN SENDERN UND EINEM EMPFÄNGER MITTELS EINER RELAISVORRICHTUNG MIT SIMULTANER WIEDERHOLUNG

WIRELESS COMMUNICATION METHOD AND SYSTEM BETWEEN TRANSMITTING DEVICES AND A RECEIVING DEVICE VIA A REPEATING DEVICE WITH SIMULTANEOUS REPETION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.02.2019 FR 1900994**

(43) Date de publication de la demande:
**08.12.2021 Bulletin 2021/49**

(73) Titulaire: **UNABIZ**
**31670 Labège (FR)**

(72) Inventeurs:
• **HUBERT, Loïc**
  **31410 Saint-Sulpice-Sur-Lèze (FR)**
• **MANSUY, Arnaud**
  **31300 TOULOUSE (FR)**
• **CHALBOS, Nicolas**
  **31600 EAUNES (FR)**

(74) Mandataire: **Ipside**
**6, Impasse Michel Labrousse**
**31100 Toulouse (FR)**

(56) Documents cités:
**US-A1- 2006 153 132     US-A1- 2018 062 803**

EP 3 918 728 B1

**Description**

**Domaine de l'invention**

La présente invention appartient au domaine des télécommunications numériques, et concerne plus particulièrement un procédé et un système de communication sans fil entre des dispositifs émetteurs et un dispositif récepteur par l'intermédiaire d'un dispositif répéteur.

**Etat de la technique**

De manière conventionnelle, un dispositif répéteur peut être mis en oeuvre, par exemple, pour augmenter la portée d'un système de communication sans fil comportant des terminaux et un réseau d'accès sans fil comportant une pluralité de stations de base. En effet, il peut parfois se produire, pour diverses raisons, que des terminaux se trouvent hors de portée des stations de base, de sorte que les messages émis par ces terminaux ne peuvent pas être reçus par le réseau d'accès sans fil.

Dans un tel cas, il est possible de prévoir un dispositif répéteur, placé par exemple entre lesdites terminaux et une station de base dudit réseau d'accès sans fil, de telle sorte que ledit dispositif répéteur est adapté à recevoir les messages émis par les terminaux, et de telle sorte que le réseau d'accès sans fil est adapté à recevoir les messages émis par le dispositif répéteur. Dans un tel cas, le dispositif répéteur retransmet à destination du réseau d'accès sans fil les messages préalablement reçus desdits terminaux, de sorte que les terminaux peuvent échanger des messages avec ledit réseau d'accès sans fil par l'intermédiaire dudit dispositif répéteur.

Toutefois, la mise en oeuvre d'un dispositif répéteur peut s'avérer complexe dans le cas où les messages sont échangés dans une bande fréquentielle soumise à des contraintes règlementaires imposant de limiter l'occupation temporelle de la bande fréquentielle par un même équipement. En effet, on comprend que si le nombre de terminaux se trouvent à portée du dispositif répéteur est élevé, alors le nombre de messages retransmis par ledit dispositif répéteur sera également élevé, et nécessitera une occupation temporelle de la bande fréquentielle pour la retransmission qui sera incompatible avec les contraintes règlementaires en vigueur.

De telles contraintes règlementaires existent notamment pour les bandes ISM (« Industrial, Scientific and Medical »), qui correspondent à des bandes fréquentielles dites libres en ce qu'elles peuvent être utilisées sans autorisation administrative préalable. De ce fait, les bandes ISM sont particulièrement avantageuses pour des applications du type M2M (acronyme anglo-saxon pour « Machine-to-Machine ») ou du type « Internet des objets » (« Internet of Things » ou IoT dans la littérature anglo-saxonne). Pour ces applications, le nombre de terminaux susceptibles d'émettre des messages à retransmettre peut s'avérer très élevé, et s'avère donc incompatible avec la mise en oeuvre d'un dispositif répéteur dans les bandes ISM. Le document de publication d'une demande de brevet US2006/153132A1 divulgue un procédé de communication sans fil entre plusieurs terminaux et un dispositif récepteur par l'intermédiaire d'un dispositif répéteur. Les dispositifs émetteurs émettent des messages dans une bande fréquentielle et ces messages sont reçus par le dispositif répéteur pendant une fenêtre de collecte, les messages sont ensuite retransmis par le dispositif répéteur à destination du dispositif récepteur sans aucun recouvrement temporel entre eux.

**Exposé de l'invention**

La présente invention a pour objectif de remédier à tout ou partie des limitations des solutions de l'art antérieur, notamment celles exposées ci-avant, en proposant une solution qui permette de limiter l'occupation temporelle d'une bande fréquentielle par un dispositif répéteur y compris lorsque le nombre de messages reçus et à retransmettre est important, par exemple pour respecter des contraintes règlementaires applicables à ladite bande fréquentielle.

A cet effet, et selon un premier aspect, l'invention concerne un procédé de communication sans fil entre une pluralité de dispositifs émetteurs et au moins un dispositif récepteur par l'intermédiaire d'un dispositif répéteur à la surface de la Terre, lesdits dispositifs émetteurs émettant des messages dans une bande fréquentielle desdits dispositif émetteurs qui sont reçus par ledit dispositif répéteur, ledit dispositif répéteur retransmettant dans ladite bande fréquentielle les messages reçus à destination dudit au moins un dispositif récepteur. Le procédé de communication sans fil comporte des étapes de :

- collecte, par le dispositif répéteur, de messages émis par des dispositifs émetteurs et reçus par ledit dispositif répéteur pendant une fenêtre de collecte,
- retransmission, par ledit dispositif répéteur, desdits messages reçus pendant ladite fenêtre de collecte à destination de l'au moins un dispositif récepteur, lesdits messages reçus pendant la fenêtre de collecte étant retransmis de telle sorte qu'au moins deux messages reçus non simultanément sont retransmis simultanément à destination dudit au moins un dispositif récepteur.

Ainsi, plutôt que de retransmettre un message immédiatement après l'avoir reçu, le dispositif répéteur commence par collecter, pendant toute la durée d'une fenêtre de collecte, des messages émis par des dispositifs émetteurs. Après avoir collecté les messages reçus pendant la durée de ladite fenêtre de collecte, lesdits messages reçus sont retransmis de telle sorte qu'au moins deux messages reçus non simultanément sont retransmis simultanément par le dispositif répéteur.

Par « retransmettre deux messages simultanément », on entend que lesdits deux messages retransmis présentent un recouvrement temporel total entre eux. Par « recouvrement temporel total », on entend que le recouvrement temporel entre deux messages retransmis simultanément est de durée égale à la durée du message le plus court parmi lesdits deux messages retransmis simultanément, ou de durée égale à la durée desdits deux messages si ceux-ci ont la même durée. A contrario, par « deux messages reçus non simultanément », on entend que les deux messages reçus ne présentent aucun recouvrement temporel entre eux (par exemple ils sont reçus l'un après l'autre) ou bien présentent un recouvrement temporel partiel entre eux, c'est-à-dire un recouvrement temporel entre eux qui n'est pas total.

Du fait que des messages reçus non simultanément par le dispositif répéteur sont retransmis simultanément, l'occupation temporelle de la bande fréquentielle utilisée par le dispositif répéteur pour retransmettre les messages est très inférieure à ce qu'elle aurait été pour retransmettre chaque message immédiatement après qu'il a été reçu par le dispositif répéteur, puisque le recouvrement temporel entre messages est augmenté.

De préférence, chaque message retransmis par le dispositif répéteur est retransmis simultanément avec au moins un autre message. De manière encore plus préférentielle, tous les messages reçus pendant la fenêtre de collecte sont retransmis simultanément. Plusieurs messages (en nombre strictement supérieur à deux) sont retransmis simultanément si le message le plus long est retransmis simultanément avec chacun des autres messages retransmis, c'est-à-dire que ledit message le plus long est retransmis avec un recouvrement temporel total avec chacun desdits autres messages retransmis.

Ainsi, l'occupation temporelle lorsque plusieurs messages sont retransmis simultanément est égale à la durée du message le plus long parmi lesdits messages retransmis simultanément.

Dans des modes particuliers de mise en oeuvre, le procédé de communication sans fil peut comporter en outre l'une ou plusieurs des caractéristiques suivantes, prises isolément ou selon toutes les combinaisons techniquement possibles.

Dans des modes particuliers de mise en oeuvre, lorsque plusieurs messages ont été reçus pendant la fenêtre de collecte, lesdits messages sont retransmis simultanément tant que la puissance instantanée totale desdits messages retransmis simultanément est inférieure à une puissance maximale prédéfinie. Dans des modes particuliers de mise en oeuvre, la fenêtre de collecte est interrompue dès que la puissance instantanée totale nécessaire pour retransmettre simultanément tous les messages reçus pendant la fenêtre de collecte est supérieure à une puissance maximale prédéfinie.

Dans des modes particuliers de mise en oeuvre, lorsque la puissance instantanée totale nécessaire pour retransmettre simultanément tous les messages reçus pendant la fenêtre de collecte est supérieure à la puissance maximale prédéfinie, seuls certains desdits messages reçus pendant la fenêtre de collecte sont retransmis simultanément.

En effet, les contraintes règlementaires en vigueur, notamment pour les bandes ISM, peuvent imposer une puissance maximale à ne pas dépasser lors de la transmission de signaux radioélectriques. Par conséquent, les messages reçus peuvent être retransmis simultanément dans la mesure où la puissance instantanée totale desdits messages retransmis simultanément reste inférieure à ladite puissance maximale pendant la retransmission. Si le nombre de messages reçus pendant la fenêtre de collecte est important, alors il peut être impossible d'un point de vue réglementaire de retransmettre simultanément tous ces messages, sauf à réduire de manière trop importante la puissance de transmission de chaque message. Dans ce cas, il est par exemple possible de former des groupes de messages de telle sorte que la puissance instantanée totale nécessaire pour retransmettre simultanément tous les messages d'un même groupe est inférieure à la puissance maximale. Ainsi, tous les messages d'un même groupe sont retransmis simultanément, et le dispositif répéteur retransmet d'abord les messages d'un premier groupe, puis les messages d'un second groupe, sans recouvrement temporel entre des messages appartenant à des groupes différents.

Dans des modes particuliers de mise en oeuvre, les messages reçus pendant la fenêtre de collecte sont triés par ordre décroissant de taille de message, et des groupes sont formés successivement avec les messages les plus longs, le nombre de messages dans chaque groupe étant limité de sorte que la puissance instantanée totale nécessaire pour retransmettre simultanément tous les messages du groupe est inférieure à une puissance maximale prédéfinie.

Dans des modes particuliers de mise en oeuvre, les messages retransmis simultanément par le dispositif répéteur sont retransmis sur des fréquences respectives différentes dans la bande fréquentielle.

De telles dispositions permettent de limiter les interférences entre messages retransmis simultanément par le dispositif répéteur. De manière plus générale, toute technique connue de l'homme du métier permettant de multiplexer des messages retransmis simultanément peut être mise en oeuvre. Notamment, il est également possible, suivant d'autres exemples, de mettre en oeuvre un accès multiple par répartition en code (« Code Division Multiple Access » ou CDMA dans la littérature anglo-saxonne) pour retransmettre simultanément les messages reçus par le dispositif répéteur.

Dans des modes particuliers de mise en oeuvre, les messages étant reçus sur des fréquences respectives différentes dans la bande fréquentielle, les messages sont retransmis sur des fréquences respectives différentes déterminées en fonction desdites fréquences sur lesquelles lesdits messages ont été reçus.

Dans des modes particuliers de mise en oeuvre, les fréquences sur lesquelles les messages sont retransmis simultanément sont identiques aux fréquences sur lesquelles lesdits messages ont été reçus pendant la fenêtre de collecte. Dans des modes particuliers de mise en oeuvre, le procédé de communication sans fil comporte des étapes de :

- mesure, par le dispositif répéteur, des instants de réception des messages reçus pendant la fenêtre de collecte,
- détermination, par le dispositif répéteur et en fonction des instants de réception desdits messages, de valeurs respectives d'une propriété physique des messages à utiliser lors de la retransmission desdits messages,
- retransmission des messages par le dispositif répéteur, en utilisant les valeurs de la propriété physique déterminées en fonction des instants de réception desdits messages.

En effet, dans certaines applications, il peut être nécessaire de pouvoir estimer l'instant auquel un message a été reçu par le dispositif répéteur. Par exemple les instants de réception d'un même message par plusieurs dispositifs récepteurs et/ou dispositifs répéteurs de positions géographiques respectives connues permettent d'estimer la position géographique du dispositif émetteur qui a émis ledit message. Or du fait que les messages sont d'abord collectés pendant la durée de la fenêtre de collecte, puis sont retransmis simultanément par le dispositif répéteur, les instants de réception desdits messages par le dispositif répéteur ne peuvent pas être déterminés par un dispositif récepteur qui reçoit les messages retransmis.

Avantageusement, les valeurs d'une propriété physique prédéterminée des messages à retransmettre peuvent être déterminées en fonction des instants de réception respectifs des messages par le dispositif répéteur. Ainsi, un dispositif récepteur qui reçoit les messages retransmis peut estimer les instants de réception des messages par le dispositif répéteur à partir des valeurs de ladite propriété physique mesurées sur les messages reçus du dispositif répéteur.

La propriété physique est différente de l'instant de réception d'un message. L'instant de réception est encodé à l'aide de la propriété physique et est donc communiqué sans avoir à utiliser de champs supplémentaires dans le message et donc sans avoir à augmenter la taille et la durée de transmission d'un message.

Dans des modes particuliers de mise en oeuvre, les valeurs de la propriété physique des messages retransmis sont déterminées de telle sorte qu'un écart entre une valeur de la propriété physique d'un message retransmis et une valeur de référence prédéterminée de ladite propriété physique est représentatif d'un écart temporel entre un instant de référence et l'instant de réception dudit message par le dispositif répéteur.

Dans des modes particuliers de mise en oeuvre, le procédé de communication sans fil comporte une étape de formation et de transmission, par le dispositif répéteur, d'un message de référence en utilisant la valeur de référence de la propriété physique.

Dans des modes particuliers de mise en oeuvre, le procédé de communication sans fil comporte des étapes de :

- mesure, par l'au moins un dispositif récepteur, des valeurs de la propriété physique des messages reçus du dispositif répéteur,
- horodatage, par l'au moins un dispositif récepteur, des messages retransmis par le dispositif répéteur en fonction des valeurs mesurées de la propriété physique desdits messages reçus par ledit au moins un dispositif récepteur. Dans des modes particuliers de mise en oeuvre, la propriété physique, dont les valeurs à utiliser pour la retransmission des messages sont déterminées en fonction des instants de réception desdits messages par le dispositif répéteur, correspond à la fréquence desdits messages, ou à la puissance desdits messages ou à la phase desdits messages.

Selon un second aspect, la présente invention concerne un dispositif répéteur adapté à recevoir à la surface de la Terre des messages émis dans une bande fréquentielle par des dispositifs émetteurs et à retransmettre dans ladite bande fréquentielle les messages reçus à destination d'au moins un dispositif récepteur. Ledit dispositif répéteur comporte des moyens configurés pour :

- collecter des messages émis par des dispositifs émetteurs et reçus par ledit dispositif répéteur pendant une fenêtre de collecte,
- retransmettre lesdits messages reçus pendant ladite fenêtre de collecte à destination de l'au moins un dispositif récepteur, lesdits messages reçus pendant la fenêtre de collecte étant retransmis de telle sorte qu'au moins deux messages reçus non simultanément sont retransmis simultanément à destination dudit au moins un dispositif récepteur.

Dans des modes particuliers de réalisation, le dispositif répéteur peut comporter en outre l'une ou plusieurs des caractéristiques suivantes, prises isolément ou selon toutes les combinaisons techniquement possibles.

Dans des modes particuliers de réalisation, les messages retransmis simultanément par le dispositif répéteur sont retransmis sur des fréquences respectives différentes dans la bande fréquentielle.

Dans des modes particuliers de réalisation, les messages étant reçus sur des fréquences respectives différentes dans la bande fréquentielle, ledit dispositif répéteur est configuré pour déterminer les fréquences sur lesquelles lesdits messages sont retransmis en fonction des fréquences sur lesquelles les messages ont été reçus.

Dans des modes particuliers de réalisation, le dispositif répéteur comporte des moyens configurés pour :

- mesurer les instants de réception des messages reçus pendant la fenêtre de collecte,
- déterminer, en fonction des instants de réception desdits messages, des valeurs respectives d'une propriété physique des messages à utiliser lors de la retransmission desdits messages,
- retransmettre les messages en utilisant les valeurs de la propriété physique déterminées en fonction des instants de réception desdits messages.

Dans des modes particuliers de réalisation, le dispositif répéteur est configuré pour déterminer les valeurs de la propriété physique des messages retransmis de telle sorte qu'un écart entre une valeur de la propriété physique d'un message retransmis et une valeur de référence prédéterminée de ladite propriété physique est représentatif d'un écart temporel entre un instant de référence et l'instant de réception dudit message par le dispositif répéteur. Dans des modes particuliers de réalisation, le dispositif répéteur comporte des moyens configurés pour former et transmettre un message de référence en utilisant la valeur de référence de la propriété physique.

Dans des modes particuliers de réalisation, la propriété physique, dont les valeurs à utiliser pour la retransmission des messages sont déterminées en fonction des instants de réception desdits messages par le dispositif répéteur, correspond à la fréquence desdits messages, ou à la puissance desdits messages ou à la phase desdits messages.

Selon un troisième aspect, la présente invention concerne un système de communication sans fil comportant au moins un dispositif récepteur et au moins un dispositif répéteur selon l'un quelconque des modes de réalisation de l'invention, l'au moins un dispositif récepteur comportant des moyens configurés pour :

- mesurer les valeurs de la propriété physique des messages reçus du dispositif répéteur,
- horodater les messages retransmis par le dispositif répéteur en fonction des valeurs mesurées de la propriété physique desdits messages reçus par ledit au moins un dispositif récepteur.

**Présentation des figures**

L'invention sera mieux comprise à la lecture de la description suivante, donnée à titre d'exemple nullement limitatif, et faite en se référant aux figures qui représentent :

[Fig. 1] Figure 1 : une représentation schématique d'un exemple de réalisation d'un système de communication sans fil,

[Fig. 2] Figure 2 : une représentation schématique d'un exemple de réalisation d'un dispositif répéteur,

[Fig. 3] Figure 3 : un diagramme illustrant les principales étapes d'un procédé de communication sans fil,

[Fig. 4] Figure 4 : un spectrogramme illustrant le fonctionnement du procédé de communication sans fil de la figure 3,

[Fig. 5] Figure 5 : un diagramme illustrant un mode préféré de mise en oeuvre du procédé de communication sans fil,

[Fig. 6] Figure 6 : un spectrogramme illustrant le fonctionnement d'une première variante du procédé de communication sans fil de la figure 5,

[Fig. 7] Figure 7 : un spectrogramme illustrant le fonctionnement d'une seconde variante du procédé de communication sans fil de la figure 5.

Dans ces figures, des références identiques d'une figure à une autre désignent des éléments identiques ou analogues. Pour des raisons de clarté, les éléments représentés ne sont pas à l'échelle, sauf mention contraire.

**Description des modes de réalisation**

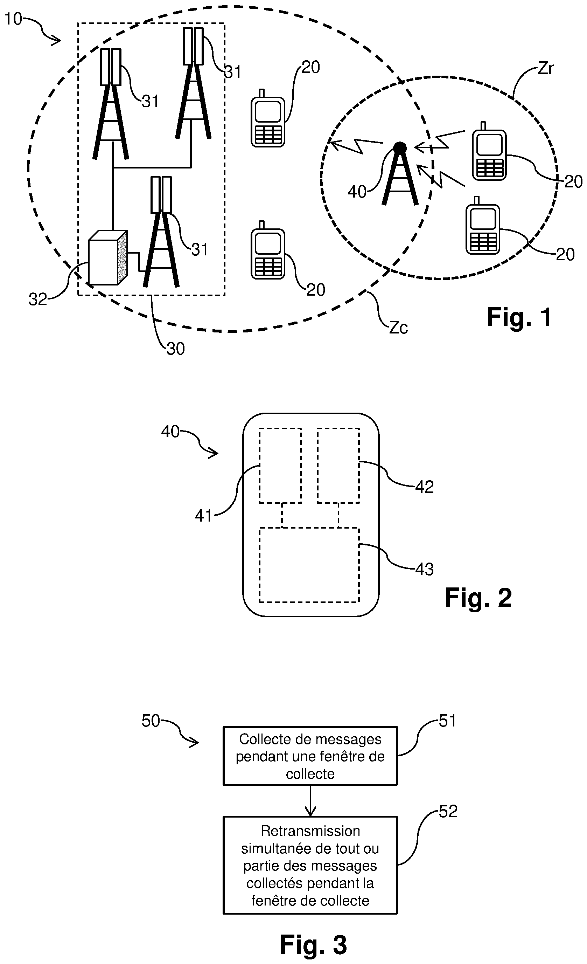

La figure 1 représente schématiquement un système 10 de communication sans fil, comportant plusieurs terminaux 20 et un réseau d'accès 30 comportant plusieurs stations de base 31.

Les terminaux 20 et les stations de base 31 du réseau d'accès échangent des messages sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Les terminaux 20 sont par exemple adaptés à émettre des messages sur un lien montant à destination du réseau d'accès 30, dans une bande fréquentielle prédéfinie. La bande fréquentielle utilisée sur le lien montant est de préférence une bande ISM, par exemple de fréquences inférieures à 1 gigahertz. Chaque station de base 31 est adaptée à recevoir les messages des terminaux 20 qui se trouvent à sa portée. Chaque message ainsi reçu est par exemple transmis à un serveur 32 du réseau d'accès 30, éventuellement accompagné d'autres informations comme un identifiant de la station de base 31 qui l'a reçu, la fréquence dudit message reçu, etc. Le serveur 32 traite par exemple l'ensemble des messages reçus par les stations de base 31.

En outre, le réseau d'accès 30 peut également être adapté à émettre, par l'intermédiaire des stations de base 31, des messages sur un lien descendant à destination des terminaux 20, lesquels sont le cas échéant adaptés à les recevoir. Les messages sont émis sur le lien descendant dans une bande fréquentielle prédéfinie. La bande fréquentielle utilisée sur le lien descendant peut être distincte de la bande fréquentielle utilisée sur le lien montant, ou bien la même bande fréquentielle peut être utilisée à la fois sur le lien montant et sur le lien descendant.

Tel qu'illustré par la figure 1, certains terminaux 20 se trouvent hors de portée du réseau d'accès 30, c'est-à-dire qu'ils se trouvent en dehors d'une zone de couverture Zc dudit réseau d'accès 30. Pour permettre à ces terminaux 20 d'échanger des messages avec le réseau d'accès 30, le système 10 de communication sans fil comporte un dispositif répéteur 40, qui est dans la zone de couverture Zc.

De préférence, le dispositif répéteur 40 est situé à la surface de la Terre. Par « situé à la surface de la Terre », on entend que le dispositif répéteur 40 est situé à une altitude égale ou inférieure à 25 kilomètres. En particulier, le dispositif répéteur 40 n'est pas embarqué dans un satellite en orbite terrestre. De préférence, tout ou partie des stations de base 31 et tout ou partie des terminaux 20 sont également situés à la surface de la Terre.

Dans la suite de la description, on se place de manière non limitative dans le cas où le dispositif répéteur 40 est mis en oeuvre sur le lien montant, c'est-à-dire pour recevoir des messages émis par des terminaux 20 et les retransmettre à destination du réseau d'accès 30.

Rien n'exclut cependant, suivant d'autres exemples, de mettre en oeuvre le dispositif répéteur 40 sur le lien descendant, c'est-à-dire pour recevoir des messages émis par des stations de base 31 et les retransmettre à destination des terminaux 20. De manière générale, le dispositif répéteur 40 peut être mis en oeuvre sur le lien montant et/ou le lien descendant.

Le dispositif répéteur 40 peut mettre en oeuvre des traitements plus ou moins complexes. Le choix d'un type particulier pour le dispositif répéteur 40 ne constitue qu'une variante d'implémentation de l'invention.

Le dispositif répéteur 40 est adapté à recevoir, dans la bande fréquentielle du lien montant, les messages des terminaux 20 qui se trouvent à sa portée (représentée par une zone de couverture Zr sur la figure 1). Les messages reçus sont retransmis, dans la bande fréquentielle du lien montant sur laquelle lesdits messages ont été reçus, à destination du réseau d'accès 30. Les messages retransmis sont reçus par au moins une station de base 31 à portée de laquelle se trouve le dispositif répéteur 40.

De préférence, les messages retransmis par le dispositif répéteur 40 sont mis en forme selon le même protocole de communication que les messages émis par les terminaux 20. Ainsi, une station de base 31 reçoit les messages retransmis par le dispositif répéteur 40 de la même façon que les messages reçus des terminaux 20 qui se trouvent à sa portée, et donc comme s'ils avaient été reçus directement des terminaux 20 qui se trouvent en dehors de sa portée. En d'autres termes, c'est un même module de réception de la station de base 31 qui est utilisé pour recevoir chaque message émis sur le lien montant, qu'il s'agisse d'un message émis par un terminal 20 ou d'un message retransmis par le dispositif répéteur 40.

La figure 2 représente schématiquement un exemple non limitatif de réalisation d'un dispositif répéteur 40. Tel qu'illustré par la figure 2, le dispositif répéteur 40 comporte un module de réception 41, un module d'émission 42 et un circuit de traitement 43.

Le module de réception 41 est adapté à recevoir les messages émis sur le lien montant et le module d'émission 42 est adapté à (re)transmettre des messages sur le lien montant. Le module de réception 41 et le module d'émission 42 comportent notamment des circuits radioélectriques respectifs comportant des équipements (antenne, amplificateur, oscillateur local, mélangeur, filtre analogique, etc.) connus de l'homme de l'art.

Le circuit de traitement 43 est adapté à mettre en oeuvre les traitements nécessaires après réception par le module de réception 41 et avant (re)transmission par le module d'émission 42, et en particulier pour mettre en oeuvre avec ledit module de réception 41 et ledit module d'émission 42 les étapes qui concernent le dispositif répéteur 40 d'un procédé 50 de communication sans fil qui sera décrit ci-après. Le circuit de traitement 43 comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter. Alternativement ou en complément, le circuit de traitement 43 comporte un ou des circuits logiques programmables (FPGA, PLD, etc.), et/ou un ou des circuits intégrés spécialisés (ASIC, etc.), et/ou un ensemble de composants électroniques discrets, etc.

En d'autres termes, le circuit de traitement 43, le module de réception 41 et le module d'émission 42 correspondent à des moyens configurés de façon logicielle (produit programme d'ordinateur spécifique) et/ou matérielle (FPGA, PLD, ASIC, composants électroniques discrets, circuit radioélectrique, etc.) pour mettre en oeuvre les étapes qui concernent le dispositif répéteur 40 d'un procédé 50 de de communication sans fil décrit ci-après.

Dans la suite de la description, on se place de manière non limitative dans le cas où les terminaux 20 émettent des messages de façon asynchrone en temps sur un lien montant à destination du réseau d'accès 30. Par « émettre de façon asynchrone en temps », on entend que les terminaux 20 déterminent de manière autonome quand ils émettent, sans coordination desdits terminaux 20 avec les stations de base 31 du réseau d'accès 30. Les stations de base 31 sont donc configurées pour pouvoir recevoir des messages à des instants arbitraires, non connus a priori desdites stations de base 31.

La figure 3 représente schématiquement les principales étapes d'un procédé 50 de communication sans fil entre les terminaux 20 et le réseau d'accès 30, par l'intermédiaire du dispositif répéteur 40.

Tel qu'illustré par la figure 3, le procédé 50 de communication sans fil comporte des étapes de :

- 51 collecte, par le dispositif répéteur 40, de messages émis par des terminaux 20 dans la bande fréquentielle du lien montant et reçus par ledit dispositif répéteur 40 pendant une fenêtre de collecte,
- 52 retransmission, par ledit dispositif répéteur 40 et dans la bande fréquentielle du lien montant, desdits messages reçus pendant ladite fenêtre de collecte à destination d'au moins une station de base 31 du réseau d'accès 30, lesdits messages reçus pendant la fenêtre de collecte étant retransmis de telle sorte qu'au moins deux messages, reçus non simultanément par le dispositif répéteur 40, sont retransmis simultanément par ledit dispositif répéteur 40. Ainsi, le dispositif répéteur 40, plutôt que de retransmettre immédiatement chaque message reçu, commence par collecter pendant toute la durée d'une fenêtre de collecte des messages émis par des terminaux 20.

La durée de la fenêtre de collecte doit permettre de collecter au moins deux messages qui ne sont pas reçus simultanément par le dispositif répéteur 40. Par conséquent, la durée de la fenêtre de collecte est avantageusement au moins deux fois supérieure à une durée de référence des messages émis par les terminaux 20. Si tous les messages ont la même durée, alors la durée de référence correspond à la durée de chaque message. Si les messages n'ont pas tous la même durée, la durée de référence correspond à la durée minimale que peut durer un message émis par un terminal 20.

Dans des modes préférés de mise en oeuvre, la durée de la fenêtre de collecte est au moins cinq fois supérieure à la durée de référence des messages, voire au moins dix fois supérieure à ladite durée de référence.

La durée de la fenêtre de collecte peut être statique ou dynamique. Dans le cas d'une durée statique, la durée de la fenêtre de collecte ne varie pas au cours du temps, et est par exemple fixée à cinq ou dix fois la durée de référence des messages. Dans le cas d'une durée dynamique, la durée de la fenêtre de collecte peut varier au cours du temps. Notamment, il est possible d'interrompre la fenêtre de collecte dès qu'un nombre maximal prédéfini de messages à retransmettre a été reçu par le dispositif répéteur 40, ou dès que la puissance instantanée totale nécessaire pour retransmettre simultanément tous les messages reçus dans une fenêtre de collecte est supérieure à un seuil prédéfini. Dans un tel cas, la durée de la fenêtre de collecte n'est pas connue a priori, sous réserve éventuellement de ne pas dépasser une durée maximale prédéfinie.

Après avoir collecté des messages pendant la durée de la fenêtre de collecte, le dispositif répéteur 40 retransmet les messages reçus. Plus particulièrement, le dispositif répéteur 40 retransmet simultanément au moins deux messages qui n'ont pas été reçus simultanément par ledit dispositif répéteur 40. Dans des modes préférés de mise en oeuvre, le dispositif répéteur 40 peut retransmettre simultanément tous les messages reçus, afin de minimiser l'occupation temporelle requise pour la retransmission.

Dans certains cas, il peut s'avérer difficile de retransmettre simultanément tous les messages reçus pendant la fenêtre de collecte. Notamment, si le nombre de messages reçus est important, alors une retransmission simultanée de tous ces messages pourrait nécessiter une puissance instantanée totale trop importante, par exemple supérieure à une puissance maximale prédéfinie par des contraintes règlementaires. Dans un tel cas, le dispositif répéteur 40 peut par exemple, tel qu'indiqué précédemment, interrompre la fenêtre de collecte dès qu'un nombre maximal prédéfini de messages à retransmettre a été reçu par le dispositif répéteur 40. Le cas échéant, ledit nombre maximal de messages à retransmettre est choisi de sorte à assurer que la puissance instantanée totale pour retransmettre simultanément ces messages ne dépasse pas la puissance maximale autorisée.

Suivant un autre exemple, lesdits messages sont retransmis simultanément tant que la puissance instantanée totale desdits messages retransmis simultanément est inférieure à la puissance maximale autorisée. Si la puissance instantanée totale nécessaire pour retransmettre simultanément tous les messages reçus pendant la fenêtre de collecte est supérieure à la puissance maximale autorisée, seuls certains desdits messages reçus pendant la fenêtre de collecte sont retransmis simultanément. Dans ce cas il est par exemple possible de former des groupes de messages de telle sorte que la puissance instantanée totale nécessaire pour retransmettre simultanément tous les messages d'un même groupe est inférieure à la puissance maximale.

Il est par exemple avantageux de trier les messages reçus pendant la fenêtre de collecte par ordre décroissant de taille de message, et de former successivement des groupes avec les messages les plus longs, le nombre de messages dans chaque groupe étant limité de sorte que la puissance instantanée totale nécessaire à l'émission de tous les messages du groupe est inférieure à un seuil prédéfini correspondant par exemple à une puissance maximale autorisée. De telles dispositions permettent en effet d'optimiser l'occupation temporelle de la bande fréquentielle utilisée par le dispositif répéteur pour retransmettre les messages tout en respectant la puissance maximale autorisée.

Dans la suite de la description, on se place de manière non limitative dans le cas où tous les messages reçus pendant la fenêtre de collecte sont retransmis simultanément par le dispositif répéteur 40.

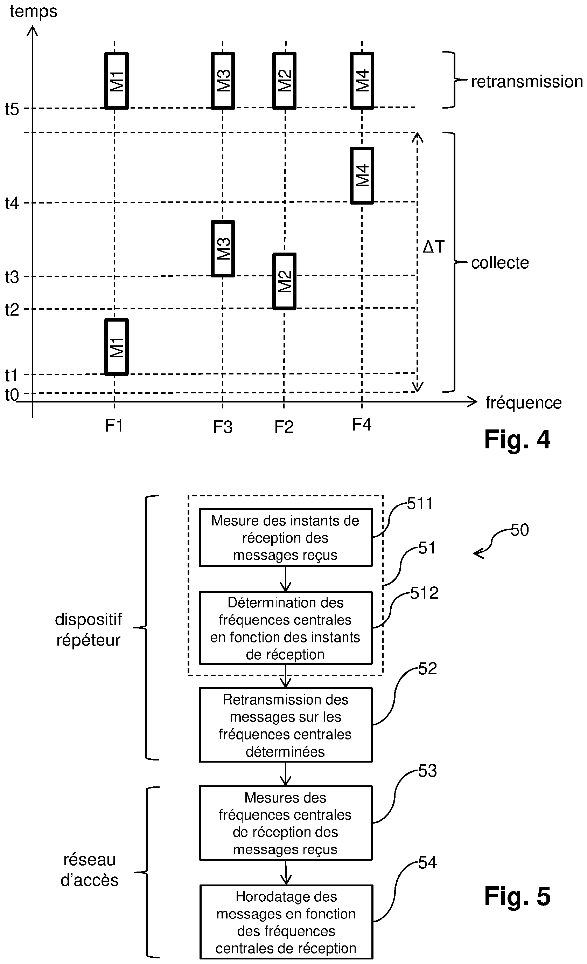

La figure 4 représente schématiquement un spectrogramme, c'est-à-dire une représentation fréquence / temps des signaux radioélectriques dans la bande fréquentielle utilisée pour l'émission et la retransmission sur le lien montant de messages par les terminaux 20 et par le dispositif répéteur 40.

Dans l'exemple illustré par la figure 4, on se place de manière non limitative dans le cas où les messages sont émis par les terminaux 20 sur des fréquences respectives différentes à l'intérieur de la bande fréquentielle du lien montant. Par exemple, les terminaux 20 peuvent émettre leurs messages de façon asynchrone en fréquences sur le lien montant. Par « émettre de façon asynchrone en fréquences », on entend que les terminaux 20 déterminent de manière autonome sur quelle fréquence ils émettent, sans coordination desdits terminaux 20 avec les stations de base 31 du réseau d'accès 30. Les stations de base 31 (et le dispositif répéteur 40) sont donc configurées pour pouvoir recevoir des messages sur des fréquences arbitraires dans la bande fréquentielle du lien montant, non connues a priori desdites stations de base 31 (et dudit dispositif répéteur 40).

Par exemple, les messages émis par les terminaux 20 et retransmis par le dispositif répéteur 40 peuvent être à bande ultra étroite. Par « bande ultra étroite » (« Ultra Narrow Band » ou UNB dans la littérature anglo-saxonne), on entend que le spectre fréquentiel instantané des messages émis par les terminaux 20 et retransmis par le dispositif répéteur 40 est de largeur fréquentielle inférieure à deux kilohertz, voire inférieure à un kilohertz. De telles dispositions sont particulièrement avantageuses en ce qu'il est possible de multiplexer en fréquences un grand nombre de messages dans une bande fréquentielle donnée, et en outre de limiter les collisions entre messages dans le cas où ceux-ci sont émis de façon asynchrone en fréquences.

Il est à noter que rien n'exclut, suivant d'autres exemples, d'avoir tout ou partie des messages émis sur une même fréquence. Le cas échéant, les messages sont par exemple multiplexés sur le lien montant en mettant en oeuvre un accès multiple par répartition en code (CDMA).

Dans l'exemple illustré par la figure 4, on se place en outre de manière non limitative dans le cas où tous les messages ont la même durée. Tel qu'indiqué précédemment, la présente invention est cependant également applicable dans le cas où les messages n'ont pas tous la même durée.

Tel qu'illustré par la figure 4, le dispositif répéteur 40 reçoit, pendant la fenêtre de collecte, considérée comme étant de durée $\Delta T$ et débutant à un instant t0 sur la figure 4 :

- un premier message M1 à un instant t1 (t1 > t0), sur une fréquence F1 à l'intérieur de la bande fréquentielle du lien montant,
- un second message M2 à un instant t2 (t2 > t1), sur une fréquence F2 à l'intérieur de la bande fréquentielle du lien montant,
- un troisième message M3 à un instant t3 (t3 > t2), sur une fréquence F3 à l'intérieur de la bande fréquentielle du lien montant,
- un quatrième message M4 à un instant t4 (t4 > t3), sur une fréquence F4 à l'intérieur de la bande fréquentielle du lien montant.

Dans l'exemple illustré par la figure 4, les messages reçus ne présentent pas de recouvrement temporel entre eux, à l'exception des messages M2 et M3, qui présentent un recouvrement temporel partiel.

Après avoir collecté les messages M1 à M4 pendant la durée $\Delta T$ de la fenêtre de collecte, le dispositif répéteur 40 retransmet les messages M1 à M4 simultanément, à un instant t5 (t5 $\geq$ t0 + $\Delta T$) sur des fréquences respectives différentes, par exemple au moyen d'un modulateur vectoriel.

Dans l'exemple non limitatif illustré par la figure 4, le dispositif répéteur 40 retransmet chaque message sur la fréquence sur laquelle ledit message a été reçu. Ainsi, le message M1 est retransmis sur la fréquence F1, le message M2 est retransmis sur la fréquence F2, etc. De telles dispositions sont avantageuses, par exemple, dans le cas où le réseau d'accès 30 connait a priori les fréquences sur lesquelles les terminaux 20 émettent leurs messages, c'est-à-dire dans le cas où les terminaux 20 n'émettent pas les messages de façon asynchrone en fréquences.

Par contre, dans le cas notamment où le réseau d'accès 30 ne connait pas a priori les fréquences sur lesquelles les terminaux 20 émettent leurs messages, par exemple du fait que les terminaux 20 émettent les messages de façon asynchrone en fréquences, alors il est possible de retransmettre les messages sur des fréquences différentes de celles sur lesquelles lesdits messages ont été reçus par le dispositif répéteur 40.

Les fréquences de retransmission sont par exemple déterminées, à l'intérieur de la bande fréquentielle du lien montant, en fonction des fréquences de réception. Par exemple, le dispositif répéteur 40 peut appliquer un décalage fréquentiel ΔF prédéfini. Le cas échéant, le message M1 est retransmis sur la fréquence (F1 + ΔF), le message M2 est retransmis sur la fréquence (F2 + ΔF), etc.

Rien n'exclut cependant, suivant d'autres exemples, de déterminer les fréquences de retransmission, à l'intérieur de la bande fréquentielle du lien montant, indépendamment des fréquences de réception.

La figure 5 représente schématiquement les principales étapes d'un mode préféré de mise en oeuvre du procédé 50 de communication sans fil, dans lequel les fréquences de retransmission des messages sont déterminées en fonction des instants de réception desdits messages par le dispositif répéteur 40. Tel qu'illustré par la figure 5, l'étape 51 de collecte comporte des étapes de :

- 511 mesure, par le dispositif répéteur 40, des instants de réception des messages reçus pendant la fenêtre de collecte,
- 512 détermination, par le dispositif répéteur 40, des fréquences sur lesquelles les messages doivent être retransmis en fonction des instants de réception desdits messages.

Ensuite, au cours de l'étape 52 de retransmission, les messages sont retransmis par le dispositif répéteur 40 sur les fréquences déterminées en fonction des instants de réception desdits messages.

Au cours de l'étape 512 de détermination, les fréquences de retransmission sont déterminées de telle sorte que deux messages reçus à des instants différents sont retransmis sur des fréquences différentes. De préférence, la fonction utilisée pour déterminer les fréquences de retransmission est telle qu'une fréquence à l'intérieur de la bande fréquentielle du lien montant ne correspond qu'à un seul instant de réception à l'intérieur de la fenêtre de collecte. Eventuellement, plusieurs fréquences à l'intérieur de la bande fréquentielle du lien montant peuvent correspondre à un même instant de réception à l'intérieur de la fenêtre de collecte. En effet, si deux messages sont reçus au même instant sur deux fréquences différentes, ceux-ci ne peuvent pas être retransmis simultanément sur la même fréquence (sauf éventuellement dans le cas d'un accès multiple par répartition en codes). En associant plusieurs fréquences possibles à un même instant de réception à l'intérieur de la fenêtre de collecte, ces deux messages pourront donc être retransmis sur des fréquences respectives différentes, toutes deux représentatives de l'instant auquel ces deux messages ont été reçus simultanément.

Dans la suite de la description, on se place de manière non limitative dans le cas où chaque instant de réception à l'intérieur de la fenêtre de collecte correspond à une fréquence unique à l'intérieur de la bande fréquentielle du lien montant, et où chaque fréquence à l'intérieur de ladite bande fréquentielle correspond à un instant de réception unique à l'intérieur de ladite fenêtre de collecte.

Dans des modes préférés de mise en oeuvre, les fréquences de retransmission des messages sont déterminées de telle sorte qu'un écart fréquentiel entre une fréquence de retransmission d'un message et une fréquence de référence prédéterminée est représentatif d'un écart temporel entre un instant de référence et l'instant de réception dudit message par le dispositif répéteur 40. L'instant de référence est par exemple l'instant t0 de début de la fenêtre de collecte, l'instant (t0 + ΔT) de fin de ladite fenêtre de collecte, un instant prédéfini à l'intérieur de la fenêtre de collecte, l'instant t5 de retransmission du message, etc. La fréquence de référence est par exemple la fréquence minimale Fmin de la bande fréquentielle du lien montant, la fréquence maximale Fmax de la bande fréquentielle du lien montant, une fréquence prédéfinie à l'intérieur de la bande fréquentielle du lien montant, etc.

Dans la suite de la description, on se place de manière non limitative dans le cas où l'instant de référence correspond à l'instant t0 de début de la fenêtre de collecte, et où la fréquence de référence correspond à la fréquence minimale Fmin de la bande fréquentielle du lien montant. Par exemple, l'écart fréquentiel est proportionnel à l'écart temporel. Pour un message Mm reçu à un instant tm, l'écart fréquentiel ΔFm déterminant la fréquence F'm de retransmission est par exemple déterminé selon l'expression suivante :

[Math. 1]

$$\Delta Fm = (Fmax - Fmin) \times (tm - t0)/\Delta T$$

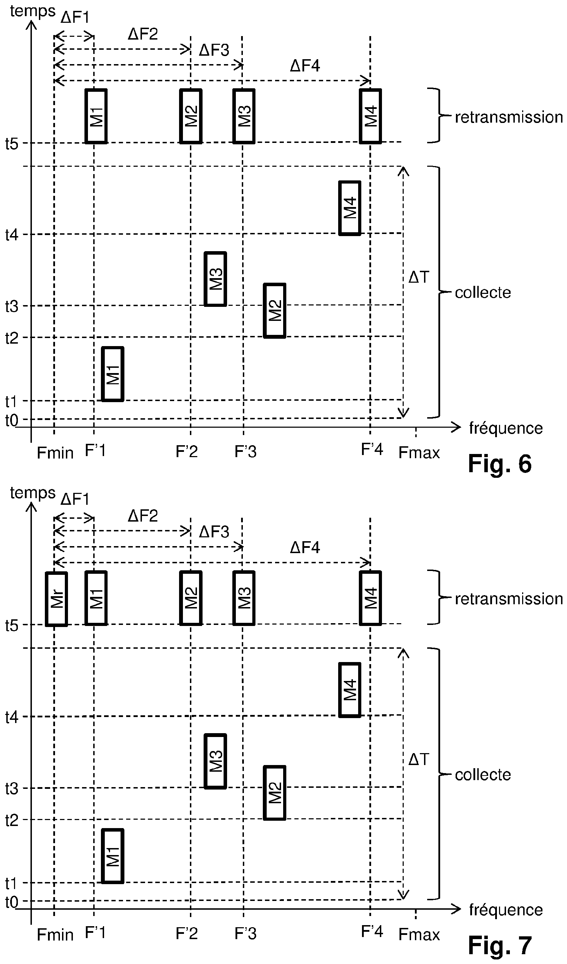

La figure 6 représente schématiquement un spectrogramme, c'est-à-dire une représentation fréquence / temps des signaux radioélectriques dans la bande fréquentielle du lien montant. Comme sur la figure 4, le dispositif répéteur 40 reçoit quatre messages M1 à M4 à des instants respectifs t1 à t4, sur des fréquences respectives F1 à F4 (non référencées sur la figure 6 à des fins de clarté de la figure). Le dispositif répéteur 40 retransmet ensuite simultanément les messages M1 à M4 sur des fréquences respectives F'1 à F'4 obtenues en appliquant des écarts fréquentiels ΔF1

à ∆F4. En appliquant l'expression précédente pour le calcul des écarts fréquentiels, on obtient les expressions suivantes pour les fréquences F'1 à F'4 de retransmission :

[Math. 2]

$$F'1 = Fmin + (Fmax - Fmin)x(t1 - t0)/\Delta T$$

[Math. 3]

$$F'2 = Fmin + (Fmax - Fmin)x(t2 - t0)/\Delta T$$

[Math. 4]

$$F'3 = Fmin + (Fmax - Fmin)x(t3 - t0)/\Delta T$$

[Math. 5]

$$F'4 = Fmin + (Fmax - Fmin)x(t4 - t0)/\Delta T$$

Tel qu'illustré par la figure 5, le procédé 50 de communication sans fil peut comporter en outre, si le réseau d'accès 30 est configuré pour déterminer les instants de réception des messages par le dispositif répéteur 40, des étapes de :

- 53 mesure, par le réseau d'accès 30, des fréquences de réception des messages retransmis par le dispositif répéteur 40,
- 54 horodatage, par le réseau d'accès 30, des messages retransmis par le dispositif répéteur 40 en fonction des fréquences de réception desdits messages.

Les messages retransmis par le dispositif répéteur 40 sont reçus par au moins une station de base 31 du réseau d'accès 30. En mesurant les fréquences de réception desdits messages par une station de base 31, on obtient une estimation des fréquences de retransmission de ces messages par le dispositif répéteur 40. Les fréquences de retransmission des messages par le dispositif répéteur 40 ayant été déterminées à partir des instants de réception des messages en appliquant une fonction connue du réseau d'accès 30, on comprend donc que le réseau d'accès 30 peut estimer ces instants de réception à partir des mesures des fréquences de réception des messages retransmis par le dispositif répéteur 40.

Dans le cas décrit précédemment, dans lequel l'écart fréquentiel à une fréquence de référence est représentatif de l'écart temporel entre l'instant de réception et un instant de référence, plusieurs possibilités peuvent être envisagées pour déterminer les instants de réception des messages par le dispositif répéteur 40.

Notamment, l'instant de référence, s'il n'est pas connu par le réseau d'accès 30, peut être par exemple indiqué dans un message de référence formé et transmis par le dispositif répéteur 40. Alternativement, et de manière non limitative, le réseau d'accès 30 peut estimer l'instant de référence à partir de l'instant tr auquel les messages retransmis ont été reçus par une station de base 31. Par exemple, si l'instant de référence correspond à l'instant t0 de début de la fenêtre de collecte, et en considérant que le réseau d'accès connaît la durée ∆T de la fenêtre de collecte, l'instant de référence peut être estimé comme étant égal à (tr - ∆T) en faisant les hypothèses suivantes :

- le temps de propagation entre le dispositif répéteur 40 et le réseau d'accès 30 est négligeable,
- le temps écoulé entre l'instant (t0 + ∆T) de fin de la fenêtre de collecte et l'instant t5 de retransmission des messages par le dispositif répéteur 40 est négligeable.

Le dispositif répéteur 40 peut également inclure dans un message de référence des informations permettant au réseau d'accès 30 d'estimer l'instant de référence, comme par exemple la durée ∆T de la fenêtre de collecte, le temps écoulé entre l'instant de fin de la fenêtre de collecte et l'instant de retransmission des messages, etc.

La fréquence de référence, si elle n'est pas connue par le réseau d'accès 30, peut être par exemple indiquée dans un message de référence formé et transmis par le dispositif répéteur 40. Alternativement, le dispositif répéteur 40 peut former un message de référence (pouvant inclure des informations utiles pour estimer l'instant de référence) et l'émettre directement sur la fréquence de référence, qui appartient le cas échéant à la bande fréquentielle du lien montant. La figure 7 représente schématiquement un spectrogramme qui reprend les mêmes éléments que la figure 6, et qui représente en outre un message de référence Mr qui est transmis simultanément avec les messages retransmis, sur la fréquence de référence qui correspond dans cet exemple à la fréquence minimale Fmin de la bande fréquentielle du lien montant. Une telle émission d'un message de référence Mr sur la fréquence de référence est avantageuse en ce qu'elle permet au réseau d'accès 30 d'estimer une éventuelle erreur introduite par le dispositif répéteur 40 sur la génération des fréquences. En mesurant la fréquence de réception du message de référence, et en comparant cette fréquence de réception à la fréquence de référence telle que générée par le réseau d'accès 30, il est possible de synchroniser en fréquences le dispositif répéteur 40 et la station de base 31 qui a reçu le message de référence. Une telle synchronisation en fréquences permet d'estimer avec une plus grande précision les écarts fréquentiels appliqués par le dispositif répéteur 40, et donc d'estimer avec une plus grande précision les instants de réception des messages par le dispositif répéteur 40.

Il est à noter que tout ce qui a été décrit précédemment dans le cas où les fréquences de retransmission sont déterminées en fonction des instants de réception des messages par le dispositif répéteur 40 est généralisable à d'autres propriétés physiques des messages retransmis.

Notamment, il est possible d'encoder les instants de réception des messages reçus par le dispositif répéteur 40 dans la puissance de retransmission desdits messages par ledit dispositif répéteur 40. Le cas échéant, le dispositif répéteur 40 peut par exemple mesurer les instants de réception des messages reçus pendant la fenêtre de collecte, et déterminer les puissances de retransmission desdits messages en fonction des instants de réception desdits messages. Par exemple, les puissances de retransmission des messages sont déterminées de telle sorte qu'un écart de puissance entre une puissance de retransmission d'un message et une puissance de référence prédéterminée est représentatif d'un écart temporel entre l'instant de référence et l'instant de réception dudit message par le dispositif répéteur 40. Le cas échéant, la puissance de référence est par exemple la puissance de transmission d'un message de référence formé par ledit dispositif répéteur 40. De son côté, le réseau d'accès 30 peut par exemple mesurer les puissances de réception des messages retransmis et du message de référence (qui sont représentatives des puissances de retransmission et de la puissance de référence aux pertes par propagation près), et horodater les messages retransmis par le dispositif répéteur 40 en fonction des puissances de réception desdits messages retransmis et du message de référence, de manière analogue à ce qui a été décrit précédemment.

Il est également possible de considérer des propriétés physiques de retransmission, autres que la fréquence de retransmission ou la puissance de retransmission, pour encoder les instants de réception desdits messages par le dispositif répéteur 40. Notamment, il est également possible d'encoder les instants de réception desdits messages par le dispositif répéteur 40 dans la phase des messages retransmis. Par exemple, les phases de retransmission des messages sont déterminées de telle sorte qu'un écart de phase entre une phase de retransmission d'un message et une phase de référence prédéterminée est représentatif d'un écart temporel entre l'instant de référence et l'instant de réception dudit message par le dispositif répéteur 40. Le cas échéant, la phase de référence est par exemple la phase initiale de transmission d'un message de référence formé par ledit dispositif répéteur 40. De son côté, le réseau d'accès 30 peut par exemple mesurer les phases de réception des messages retransmis et du message de référence (qui sont représentatives des phases de retransmission et de la phase de référence aux déphasages introduits par propagation près), et horodater les messages retransmis par le dispositif répéteur 40 en fonction des phases de réception desdits messages retransmis et du message de référence, de manière analogue à ce qui a été décrit précédemment.

Il est à noter que le message de référence, éventuellement transmis par le dispositif répéteur 40, peut prendre toute forme adaptée. Notamment, le message de référence peut se présenter, dans certains modes de réalisation, sous la forme d'une fréquence porteuse non modulée (c'est-à-dire un signal sinusoïdal), en particulier lorsque le message de référence est transmis sur la fréquence de référence et/ou avec la puissance de référence.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant un dispositif répéteur 40 sur un lien montant entre des terminaux 20 et un réseau d'accès 30 d'un système 10 de communication sans fil. Toutefois, l'invention est applicable également sur le lien descendant entre le réseau d'accès 30 et les terminaux 20, voire dans un système 10 de communication sans fil de type ad hoc pour permettre par exemple des échanges entre terminaux 20, sans infrastructure de type réseau d'accès 30. L'invention est donc généralisable à un dispositif répéteur 40 qui retransmet vers au moins un dispositif récepteur des messages reçus de dispositifs émetteurs. Sur le lien montant décrit précédemment, les dispositifs émetteurs correspondent à des terminaux 20 et/ou à d'autres dispositifs répéteurs, tandis que les dispositifs récepteurs correspondent à des stations de base 31 et/ou à d'autres dispositifs répéteurs. Sur le lien descendant décrit précédemment, les dispositifs émetteurs correspondent à des stations de base 31 et/ou à d'autres dispositifs répéteurs, tandis que les dispositifs récepteurs correspondent à des terminaux 20 et/ou à d'autres dispositifs répéteurs.

En outre, l'invention a été décrite en considérant principalement le cas où au moins deux messages reçus non simultanément pendant la fenêtre de collecte sont retransmis simultanément par le dispositif répéteur 40. De manière plus générale, il peut également être envisagé de ne pas nécessairement retransmettre simultanément au moins deux messages, dès lors que les instants de retransmission des messages reçus sont déterminés de sorte à augmenter le recouvrement temporel entre les messages lors de la retransmission par rapport au recouvrement temporel entre ces mêmes messages lors de leur réception pendant la fenêtre de collecte.

**Revendications**

**1.** - Procédé (50) de communication sans fil entre une pluralité de dispositifs émetteurs (20) et au moins un dispositif récepteur (30) par l'intermédiaire d'un dispositif répéteur (40) à la surface de la Terre, lesdits dispositifs émetteurs émettant des messages dans une bande fréquentielle desdits dispositifs émetteurs qui sont reçus par ledit dispositif répéteur, ledit dispositif répéteur retransmettant dans ladite bande fréquentielle les messages reçus à destination dudit au moins un dispositif récepteur, **caractérisé en ce que** le procédé comporte des étapes de :

- (51) collecte, par le dispositif répéteur (40), de messages émis par des dispositifs émetteurs et reçus par ledit dispositif répéteur pendant une fenêtre de collecte,
- (52) retransmission, par ledit dispositif répéteur, desdits messages reçus pendant ladite fenêtre de collecte à destination de l'au moins un dispositif récepteur, lesdits messages reçus pendant la fenêtre de collecte étant retransmis de telle sorte qu'au moins deux messages reçus non simultanément sont retransmis simultanément à destination dudit au moins un dispositif récepteur.

**2.** - Procédé (50) selon la revendication 1, dans lequel tous les messages reçus pendant la fenêtre de collecte sont retransmis simultanément, et dans lequel la fenêtre de collecte est interrompue dès que la puissance instantanée totale nécessaire pour retransmettre simultanément tous les messages reçus pendant la fenêtre de collecte est supérieure à une puissance maximale prédéfinie.

**3.** - Procédé (50) selon la revendication 1, dans lequel, lorsque la puissance instantanée totale nécessaire pour retransmettre simultanément tous les messages reçus pendant la fenêtre de collecte est supérieure à une puissance maximale prédéfinie, seuls certains desdits messages reçus pendant la fenêtre de collecte sont retransmis simultanément, et dans lequel les messages reçus pendant la fenêtre de collecte sont triés par ordre décroissant de taille de message, et des groupes sont formés successivement avec les messages les plus longs, le nombre de messages dans chaque groupe étant limité de sorte que la puissance instantanée totale nécessaire pour retransmettre simultanément tous les messages du groupe est inférieure à une puissance maximale prédéfinie.

**4.** - Procédé (50) selon l'une quelconque des revendications 1 à 3, comportant des étapes de :

- (511) mesure, par le dispositif répéteur (40), des instants de réception des messages reçus pendant la fenêtre de collecte,
- (512) détermination, par le dispositif répéteur (40) et en fonction des instants de réception desdits messages, de valeurs respectives d'une propriété physique des messages à utiliser lors de la retransmission desdits messages, ladite propriété physique étant différente de l'instant de réception d'un message,
- (52) retransmission des messages par le dispositif répéteur (40), en utilisant les valeurs de la propriété physique déterminées en fonction des instants de réception desdits messages.

**5.** - Procédé (50) selon la revendication 4, dans lequel les valeurs de la propriété physique des messages retransmis sont déterminées de telle sorte qu'un écart entre une valeur de la propriété physique d'un message retransmis et une valeur de référence prédéterminée de ladite propriété physique est représentatif d'un écart temporel entre un instant de référence et l'instant de réception dudit message par le dispositif répéteur.

**6.** - Procédé (50) selon la revendication 5, comportant une étape de formation et de transmission, par le dispositif répéteur (40), d'un message de référence (Mr) en utilisant la valeur de référence de la propriété physique.

**7.** - Procédé (50) selon l'une quelconque des revendications 4 à 6, comportant des étapes de :

- (53) mesure, par l'au moins un dispositif récepteur (30), des valeurs de la propriété physique des messages reçus du dispositif répéteur (40),
- (54) horodatage, par l'au moins un dispositif récepteur (30), des messages retransmis par le dispositif répéteur (40) en fonction des valeurs mesurées de la propriété physique desdits messages reçus par ledit au moins un dispositif récepteur.

8. - Procédé (50) selon l'une quelconque des revendications 4 à 7, dans lequel la propriété physique, dont les valeurs à utiliser pour la retransmission des messages sont déterminées en fonction des instants de réception desdits messages par le dispositif répéteur (40), correspond à la fréquence desdits messages, ou à la puissance desdits messages ou à la phase desdits messages.

9. - Dispositif répéteur (40) adapté à recevoir à la surface de la Terre des messages émis dans une bande fréquentielle par des dispositifs émetteurs (20) et à retransmettre dans ladite bande fréquentielle les messages reçus à destination d'au moins un dispositif récepteur (30), **caractérisé en ce que** ledit dispositif répéteur comporte des moyens configurés pour :

- collecter des messages émis par des dispositifs émetteurs et reçus par ledit dispositif répéteur pendant une fenêtre de collecte,
- retransmettre lesdits messages reçus pendant ladite fenêtre de collecte à destination de l'au moins un dispositif récepteur, lesdits messages reçus pendant la fenêtre de collecte étant retransmis de telle sorte qu'au moins deux messages reçus non simultanément sont retransmis simultanément à destination dudit au moins un dispositif récepteur.

10. - Dispositif répéteur (40) selon la revendication 9, dans lequel tous les messages reçus pendant la fenêtre de collecte sont retransmis simultanément, et dans lequel la fenêtre de collecte est interrompue dès que la puissance instantanée totale nécessaire pour retransmettre simultanément tous les messages reçus pendant la fenêtre de collecte est supérieure à une puissance maximale prédéfinie.

11. - Dispositif répéteur (40) selon la revendication 9, dans lequel, lorsque la puissance instantanée totale nécessaire pour retransmettre simultanément tous les messages reçus pendant la fenêtre de collecte est supérieure à une puissance maximale prédéfinie, seuls certains desdits messages reçus pendant la fenêtre de collecte sont retransmis simultanément, et dans lequel les messages reçus pendant la fenêtre de collecte sont triés par ordre décroissant de taille de message, et des groupes sont formés successivement avec les messages les plus longs, le nombre de messages dans chaque groupe étant limité de sorte que la puissance instantanée totale nécessaire pour retransmettre simultanément tous les messages du groupe est inférieure à une puissance maximale prédéfinie.

12. - Dispositif répéteur (40) selon l'une quelconque des revendications 9 à 11, comportant des moyens configurés pour :

- mesurer les instants de réception des messages reçus pendant la fenêtre de collecte,
- déterminer, en fonction des instants de réception desdits messages, des valeurs respectives d'une propriété physique des messages à utiliser lors de la retransmission desdits messages, ladite propriété physique étant différente de l'instant de réception d'un message,
- retransmettre les messages en utilisant les valeurs de la propriété physique déterminées en fonction des instants de réception desdits messages.

13. - Dispositif répéteur (40) selon la revendication 12, configuré pour déterminer les valeurs de la propriété physique des messages retransmis de telle sorte qu'un écart entre une valeur de la propriété physique d'un message retransmis et une valeur de référence prédéterminée de ladite propriété physique est représentatif d'un écart temporel entre un instant de référence et l'instant de réception dudit message par le dispositif répéteur.

14. - Dispositif répéteur (40) selon l'une quelconque des revendications 12 à 13, dans lequel la propriété physique, dont les valeurs à utiliser pour la retransmission des messages sont déterminées en fonction des instants de réception desdits messages par le dispositif répéteur (40), correspond à la fréquence desdits messages, ou à la puissance desdits messages ou à la phase desdits messages.

15. - Système (10) de communication sans fil comportant au moins un dispositif récepteur (30) et au moins un dispositif répéteur (40) selon l'une quelconque des revendications 12 à 14, **caractérisé en ce que** l'au moins un dispositif récepteur (30) comporte des moyens configurés pour :

- mesurer les valeurs de la propriété physique des messages reçus du dispositif répéteur (40),
- horodater les messages retransmis par le dispositif répéteur (40) en fonction des valeurs mesurées de la propriété physique desdits messages reçus par ledit au moins un dispositif récepteur

**Patentansprüche**

1. Verfahren (50) zur drahtlosen Kommunikation zwischen einer Vielzahl von Sendevorrichtungen (20) und mindestens einer Empfängervorrichtung (30) mittels einer Repeater-Vorrichtung (40) auf der Oberfläche der Erde, wobei die Sendevorrichtungen Mitteilungen in einem Frequenzband der Sendevorrichtungen senden, die von der Repeater-Vorrichtung empfangen werden, wobei die Repeater-Vorrichtung die empfangenen Mitteilungen in dem Frequenzband an die mindestens eine Empfängervorrichtung weiterleitet, **dadurch gekennzeichnet, dass** das Verfahren die folgenden Schritte beinhaltet:

   - (51) Sammeln durch die Repeater-Vorrichtung (40) von Mitteilungen, die von den Sendevorrichtungen gesendet werden, und von der Repeater-Vorrichtung während eines Sammelfensters empfangen werden,
   - (52) Weiterleiten durch die Repeater-Vorrichtung der Mitteilungen, die während des Sammelfensters empfangen werden, an die mindestens eine Empfängervorrichtung, wobei die während des Sammelfensters empfangenen Mitteilungen derart weitergeleitet werden, dass mindestens zwei nicht gleichzeitig empfangene Mitteilungen gleichzeitig an die mindestens eine Empfängervorrichtung weitergeleitet werden.

2. Verfahren (50) nach Anspruch 1, wobei alle während des Sammelfensters empfangenen Mitteilungen gleichzeitig weitergeleitet werden, und wobei das Sammelfenster unterbrochen wird, sobald die momentane Gesamtleistung, die zum gleichzeitigen Weiterleiten aller während des Sammelfensters empfangenen Mitteilungen nötig ist, größer als eine vordefinierte maximale Leistung ist.

3. Verfahren (50) nach Anspruch 1, wobei, wenn die momentane Gesamtleistung, die zum gleichzeitigen Weiterleiten aller während des Sammelfensters empfangenen Mitteilungen nötig ist, größer als eine vordefinierte maximale Leistung ist, nur bestimmte der während des Sammelfensters empfangenen Mitteilungen gleichzeitig weitergeleitet werden, und wobei die während es Sammelfensters empfangenen Mitteilungen in absteigender Reihenfolge der Mitteilungsgröße sortiert werden, und nacheinander Gruppen mit den längsten Mitteilungen gebildet werden, wobei die Anzahl an Mitteilungen in jeder Gruppe derart begrenzt ist, dass die momentane Gesamtleistung, die zum gleichzeitigen Weiterleiten aller Mitteilungen der Gruppe nötig ist, kleiner als eine vordefinierte maximale Leistung ist.

4. Verfahren (50) nach einem der Ansprüche 1 bis 3, die folgenden Schritte beinhaltend:

   - (511) Messen durch die Repeater-Vorrichtung (40) der Empfangsmomente der Mitteilungen, die während des Sammelfensters empfangen werden,
   - (512) Bestimmen durch die Repeater-Vorrichtung (40) und in Abhängigkeit von den Empfangsmomenten der Mitteilungen von jeweiligen Werten einer physikalischen Kenngröße der Mitteilungen, die bei der Weiterleitung der Mitteilungen zu verwenden ist, wobei sich die physikalische Kenngröße vom Empfangsmoment einer Mitteilung unterscheidet,
   - (52) Weiterleiten der Mitteilungen durch die Repeater-Vorrichtung (40) durch Verwenden der Werte der physikalischen Kenngröße, die in Abhängigkeit von den Empfangsmomenten der Mitteilungen bestimmt werden.

5. Verfahren (50) nach Anspruch 4, wobei die Werte der physikalischen Kenngröße der weitergeleiteten Mitteilungen derart bestimmt werden, dass eine Abweichung zwischen einem Wert der physikalischen Kenngröße einer weitergeleiteten Mitteilung und einem vorbestimmten Bezugswert der physikalischen Kenngröße repräsentativ für eine zeitliche Abweichung zwischen einem Bezugsmoment und dem Empfangsmoment der Mitteilung durch die Repeater-Vorrichtung ist.

6. Verfahren (50) nach Anspruch 5, einen Schritt zum Bilden und Übertragen durch die Repeater-Vorrichtung (40) einer Bezugsmitteilung (Mr) durch Verwenden des Bezugswerts der physikalischen Kenngröße beinhaltend.

7. Verfahren (50) nach einem der Ansprüche 4 bis 6, die folgenden Schritte beinhaltend:

   - (53) Messen durch die mindestens eine Empfängervorrichtung (30) der Werte der physikalischen Kenngröße der von der Repeater-Vorrichtung (40) empfangenen Mitteilungen,
   - (54) Zeitstempeln durch die mindestens eine Empfängervorrichtung (30) der von der Repeater-Vorrichtung (40) weitergeleiteten Mitteilungen in Abhängigkeit von den gemessenen Werten der physikalischen Kenngröße der von der mindestens einen Empfängervorrichtung empfangenen Mitteilungen.

8. Verfahren (50) nach einem der Ansprüche 4 bis 7, wobei die physikalische Kenngröße, deren Werte, die für die Weiterleitung der Mitteilungen zu verwenden sind, in Abhängigkeit von den Empfangsmomenten der Mitteilungen durch die Repeater-Vorrichtung (40) bestimmt werden, der Frequenz der Mitteilungen oder der Leistung der Mitteilungen oder der Phase der Mitteilungen entspricht.

9. Repeater-Vorrichtung (40), die angepasst ist, um auf der Oberfläche der Erde Mitteilungen zu empfangen, die in einem Frequenzband durch die Sendevorrichtungen (20) gesendet werden, und in dem Frequenzband die empfangenen Mitteilungen an mindestens eine Empfängervorrichtung (30) weiterzuleiten, **dadurch gekennzeichnet, dass** die Repeater-Vorrichtung Mittel beinhaltet, die konfiguriert sind, zum:

   - Sammeln von Mitteilungen, die von den Sendevorrichtungen gesendet werden und von der Repeater-Vorrichtung während eines Sammelfensters empfangen werden,
   - Weiterleiten der Mitteilungen, die während des Sammelfensters empfangen werden, an die mindestens eine Empfängervorrichtung, wobei die während des Sammelfensters empfangenen Mitteilungen derart weitergeleitet werden, dass mindestens zwei nicht gleichzeitig empfangene Mitteilungen gleichzeitig an die mindestens eine Empfängervorrichtung weitergeleitet werden.

10. Repeater-Vorrichtung (40) nach Anspruch 9, wobei alle während des Sammelfensters empfangenen Mitteilungen gleichzeitig weitergeleitet werden, und wobei das Sammelfenster unterbrochen wird, sobald die momentane Gesamtleistung, die zum gleichzeitigen Weiterleiten aller während des Sammelfensters empfangenen Mitteilungen nötig ist, größer als eine vordefinierte maximale Leistung ist.

11. Repeater-Vorrichtung (40) nach Anspruch 9, wobei, wenn die momentane Gesamtleistung, die zum gleichzeitigen Weiterleiten aller während des Sammelfensters empfangenen Mitteilungen nötig ist, größer als eine vordefinierte maximale Leistung ist, nur bestimmte der während des Sammelfensters empfangenen Mitteilungen gleichzeitig weitergeleitet werden, und wobei die während es Sammelfensters empfangenen Mitteilungen in absteigender Reihenfolge der Mitteilungsgröße sortiert werden, und nacheinander Gruppen mit den längsten Mitteilungen gebildet werden, wobei die Anzahl an Mitteilungen in jeder Gruppe derart begrenzt ist, dass die momentane Gesamtleistung, die zum gleichzeitigen Weiterleiten aller Mitteilungen der Gruppe nötig ist, kleiner als eine vordefinierte maximale Leistung ist.

12. Repeater-Vorrichtung (40) nach einem der Ansprüche 9 bis 11, Mittel beinhaltend, die konfiguriert sind, zum:

   - Messen der Empfangsmomente der Mitteilungen, die während des Sammelfensters empfangen werden,
   - Bestimmen in Abhängigkeit von den Empfangsmomenten der Mitteilungen der jeweiligen Werte einer physikalischen Kenngröße der Mitteilungen, die bei der Weiterleitung der Mitteilungen zu verwenden ist, wobei sich die physikalische Kenngröße vom Empfangsmoment einer Mitteilung unterscheidet,
   - Weiterleiten der Mitteilungen durch Verwenden der Werte der physikalischen Kenngröße, die in Abhängigkeit von den Empfangsmomenten der Mitteilungen bestimmt werden.

13. Repeater-Vorrichtung (40) nach Anspruch 12, konfiguriert zum Bestimmen der Werte der physikalischen Kenngröße der weitergeleiteten Mitteilungen derart, dass eine Abweichung zwischen einem Wert der physikalischen Kenngröße einer weitergeleiteten Mitteilung und einem vorbestimmten Bezugswert der physikalischen Kenngröße repräsentativ für eine zeitliche Abweichung zwischen einem Bezugsmoment und dem Empfangsmoment der Mitteilung durch die Repeater-Vorrichtung ist.

14. Repeater-Vorrichtung (40) nach einem der Ansprüche 12 bis 13, wobei die physikalische Kenngröße, deren Werte, die für die Weiterleitung der Mitteilungen zu verwenden sind, in Abhängigkeit von den Empfangsmomenten der Mitteilungen durch die Repeater-Vorrichtung (40) bestimmt werden, der Frequenz der Mitteilungen oder der Leistung der Mitteilungen oder der Phase der Mitteilungen entspricht.

15. System (10) zur drahtlosen Kommunikation, mindestens eine Empfängervorrichtung (30) und mindestens eine Repeater-Vorrichtung (40) nach einem der Ansprüche 12 bis 14 beinhaltend, **dadurch gekennzeichnet, dass** die mindestens eine Empfängervorrichtung (30) Mittel beinhaltet, die konfiguriert sind, zum:

   - Messen der Werte der physikalischen Kenngröße der von der Repeater-Vorrichtung (40) empfangenen Mitteilungen,
   - Zeitstempeln der von der Repeater-Vorrichtung (40) weitergeleiteten Mitteilungen in Abhängigkeit von den gemessenen Werten der physikalischen Kenngröße der von der mindestens einen Empfängervorrichtung empfangenen Mitteilungen.

**Claims**

1. Method (50) for wireless communication between a plurality of transmitter devices (20) and at least one receiver device (30) by means of a repeater device (40) on the surface of the Earth, said transmitter devices transmitting messages in a frequency band of said transmitter devices that are received by said repeater device, said repeater device retransmitting in said frequency band the received messages to said at least one receiver device, **characterised in that** the method includes steps of:

   - (51) collecting, by the repeater device (40), messages transmitted by transmitter devices and received by said repeater device during a collection window,
   - (52) retransmission, by said repeater device, of said messages received during said collection window to the at least one receiver device, said messages received during the collection window being retransmitted so that at least two messages received non-simultaneously are retransmitted simultaneously to said at least one receiver device.

2. Method (50) according to claim 1, wherein all the messages received during the collection window are retransmitted simultaneously, and wherein the collection window is interrupted as soon as the total instantaneous power necessary for simultaneously retransmitting all the messages received during the collection window is higher than a predefined maximum power.

3. Method (50) according to claim 1, wherein, when the total instantaneous power necessary for simultaneously retransmitting all the messages received during the collection window is higher than a predefined maximum power, only some of said messages received during the collection window are retransmitted simultaneously, and wherein the messages received during the collection window are sorted in decreasing order of message size, and groups are formed successively with the longest messages, the number of messages in each group being limited so that the total instantaneous power necessary for simultaneously retransmitting all the messages of the group is lower than a predefined maximum power.

4. Method (50) according to any one of claims 1 to 3, including steps of:

   - (511) measuring, by the repeater device (40), instants of reception of the messages received during the collection window,
   - (512) determining, by the repeater device (40) and according to the instants of reception of said messages, respective values of a physical property of the messages to be used during the retransmission of said messages, said physical property being different than the instant of reception of a message,
   - (52) retransmitting the messages by the repeater device (40), using the values of the physical property determined according to the instants of reception of said messages.

5. Method (50) according to claim 4, wherein the values of the physical property of the messages retransmitted are determined so that a difference between a value of the physical property of a retransmitted message and a predetermined reference value of said physical property represents a difference in time between a reference instant and the instant of reception of said message by the repeater device.

6. Method (50) according to claim 5, including a step of forming and transmitting, by the repeater device (40), a reference message (Mr) using the reference value of the physical property.

7. Method (50) according to any one of claims 4 to 6, including steps of:

   - (53) measuring, by the at least one receiver device (30), the values of the physical property of the messages received from the repeater device (40),
   - (54) timestamping, by the at least one receiver device (30), the messages retransmitted by the repeater device (40) according to the measured values of the physical property of said messages received by said at least one receiver device.

8. Method (50) according to any one of claims 4 to 7, wherein the physical property, the values of which to be used for retransmitting the messages are determined according to the instants of reception of said messages by the receiver device (40), corresponds to the frequency of said messages, or to the power of said messages or to the phase of said messages.

9. Repeater device (40) adapted to receive, on the surface of the Earth, messages transmitted in a frequency band by transmitter devices (20) and to retransmit in said frequency band the received messages to at least one receiver device (30), **characterised in that** said repeater device includes means configured for:

   - collecting messages transmitted by transmitter devices and received by said repeater device during a collection window,
   - retransmitting said messages received during said collection window to the at least one receiver device, said messages received during the collection window being retransmitted so that at least two messages received non-simultaneously are retransmitted simultaneously to said at least one receiver device.

10. Repeater device (40) according to claim 9, wherein all the messages received during the collection window are retransmitted simultaneously, and wherein the collection window is interrupted as soon as the total instantaneous power necessary for simultaneously retransmitting all the messages received during the collection window is higher than a predefined maximum power.

11. Repeater device (40) according to claim 9, wherein, when the total instantaneous power necessary for simultaneously retransmitting all the messages received during the collection window is higher than a predefined maximum power, only some of said messages received during the collection window are retransmitted simultaneously, and wherein the messages received during the collection window are sorted in decreasing order of message size, and groups are formed successively with the longest messages, the number of messages in each group being limited so that the total instantaneous power necessary for simultaneously retransmitting all the messages of the group is lower than a predefined maximum power.

12. Repeater device (40) according to any one of claims 9 to 11, including means configured for:

   - measuring the instants of reception of the messages received during the collection window,
   - determining, according to the instants of reception of said messages, respective values of a physical property of the messages to be used during the retransmission of said messages, said physical property being different than the instant of reception of a message,
   - retransmitting the messages using the values of the physical property that were determined according to the instants of reception of said messages.

13. Repeater device (40) according to claim 12, configured for determining the values of the physical property of the retransmitted messages so that a difference between a value of the physical property of a retransmitted message and a predetermined reference value of said physical property represents a difference in time between a reference instant and the instant of reception of said message by the repeater device.

14. Repeater device (40) according to any one of claims 12 to 13, wherein the physical property, the values of which to be used for retransmitting the messages are determined according to the instants of reception of said messages by the repeater device (40), corresponds to the frequency of said messages, or to the power of said messages or to the phase of said messages.

15. Wireless communication system (10) including at least one receiver device (30) and at least one repeater device (40) according to any one of claims 12 to 14, **characterised in that** the at least one receiver device (30) includes means configured for:

   - measuring the values of the physical property of the messages received from the repeater device (40),
   - timestamping the messages transmitted by the repeater device (40) according to the measured values of the physical property of said messages received by said at least one receiver device.

**Fig. 1**

**Fig. 2**

Collecte de messages pendant une fenêtre de collecte

Retransmission simultanée de tout ou partie des messages collectés pendant la fenêtre de collecte

**Fig. 3**

**Fig. 4**

**Fig. 5**

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006153132 A1